(19) Europäisches Patentamt
European Patent Office
Office européen des brevets

(11) Publication number: 0 036 703 B1

(12) EUROPEAN PATENT SPECIFICATION

(45) Date of publication of patent specification: 07.01.87

(51) Int. Cl.[4]: B 01 J 23/56, B 01 J 23/89, B 01 J 37/02

(21) Application number: 81300483.5

(22) Date of filing: 05.02.81

# (54) Preparation of metal containing catalysts.

(30) Priority: 13.02.80 US 121190

(43) Date of publication of application: 30.09.81 Bulletin 81/39

(45) Publication of the grant of the patent: 07.01.87 Bulletin 87/02

(84) Designated Contracting States: BE DE FR GB IT NL

(56) References cited:
FR-A-2 089 389
FR-A-2 097 918
FR-A-2 157 840
FR-A-2 286 187
FR-A-2 301 500
GB-A-1 528 209
US-A-2 751 333
US-A-2 840 514
US-A-2 840 532
US-A-2 848 377
US-A-2 884 382
US-A-3 518 207
US-A-3 953 368

(73) Proprietor: MOBIL OIL CORPORATION
150 East 42nd Street
New York New York 10017 (US)

(72) Inventor: Kresge, Charles Theodore
140 Shire Drive
Sewell New Jersey 08080 (US)
Inventor: Chester, Arthur Warren
517 Country Club Drive
Cherry Hill New Jersey 08003 (US)

(74) Representative: Jones, Alan John et al
CARPMAELS & RANSFORD 43 Bloomsbury Square
London, WC1A 2RA (GB)

EP 0 036 703 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for preparing metal containing catalysts, particularly supported multimetallic catalysts comprising a platinum group metal in combination with a non-platinum group metal.

The present invention provides a process for preparing multimetallic catalyst composites comprising one or more metals of the platinum group and one or more metals from Groups VIIA and IVB of the Periodic Chart of the Elements on a common support, which comprises contacting the support with gaseous carbon dioxide in an amount and for a period of time sufficient to substantially saturate the support with carbon dioxide, thereafter impregnating the support with the desired metals and calcining the resulting composite.

Platinum containing catalysts are widely employed in the petroleum and chemical industries. Perhaps the greatest utility for such catalysts is in the reforming of petroleum naphtha to form high octance gasoline.

The art of manufacturing platinum reforming catalysts is highly developed and numerous methods and procedures have been described for the manufacture of such catalysts.

A substantial problem in the preparation of platinum-alumina catalysts, especially catalyst compositions prepared by the impregnation of solid particulate or formed alumina particles, is the achievement of uniform distribution of the platinum within the alumina structure. It has long been recognized that uniform distribution of platinum is important to the efficient utilization of this costly catalytic promoter. Thus, such distribution is important to expose as great an area of platinum surface as possible, to make full use of the alumina support and to protect the platinum against loss by attrition.

Typical of the prior patent literature concerned with procedures for achieving uniform distribution of platinum in platinum-alumina reforming catalyst are U.S. Patent Nos. 2,840,514; 2,840,532 and 2,884,382.

The first two of the above-identified patents are concerned with the addition of various salts as impregnating aids to a platinum-containing solution to assist in obtaining more uniform impregnation. Typical of such impregnating aids are various aluminum salts such as aluminum chloride and aluminum nitrate. The invention therein disclosed and claimed in the latter patent comprises pretreating a porous alumina support material, while in the dry state, with gaseous carbon dioxide in such a manner that all of the air in the pores of alumina is replaced by the gaseous carbon dioxide. Thereafter, the carbon dioxide-pretreated alumina is impregnated with a platinum solution and the resulting material dried and calcined.

U.S. Patent No. 3,518,207 describes an impregnation process for platinum-alumina catalysts which comprises contacting alumina with a carbon dioxide saturated platinum impregnating solution.

In recent years, multimetallic reforming catalysts, for example, bimetallic catalysts, have come into use. These catalysts generally contain platinum, together with one or more additional metals such as rhenium, germanium, iridium, palladium, osmium, ruthenium, rhodium, copper, silver, tin, or gold deposited on a refractory support which also contains a specified amount of halogen. U.S. Patent Nos. 2,848,377 and 3,953,368, for example, disclose platinum-iridium catalysts.

The use of trimetallic catalysts is also known in the reforming art and, in fact, single particle platinum, rhenium, and iridium catalysts on an alumina support are specifically taught in U.S. Patent Nos. 3,578,583, 3,617,520, and 3,487,009.

The use of carbon dioxide presaturation has not previously been disclosed in conjunction with the preparation of supported multimetallic platinum group containing catalysts.

It has now been discovered that supported multimetallic platinum group metal-containing catalysts exhibiting improved activity and uniform metal distribution throughout the refractory support can be obtained by pretreating the support with gaseous carbon dioxide before impregnation of the support with the desired metals.

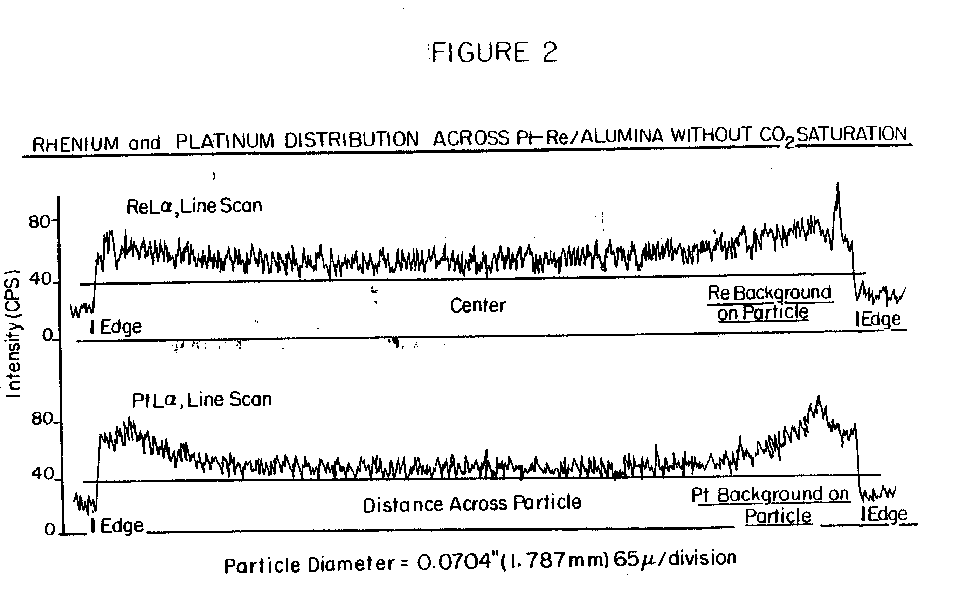

Figures 1 and 2 are plots of Lα intensity of both platinum and rhenium metals as a function of the distance across platinum-rhenium/alumina catalyst particles containing 0.3 weight percent platinum and 0.3 weight percent rhenium. Such Lα intensity is derived by focusing on electron beam on the catalyst samples. Figure 1 is specifically directed to such plots for a platinum-rhenium/alumina catalyst subjected to carbon dioxide saturation and Figure 2 is specifically directed to such plots for a platinum-rhenium/alumina catalyst prepared without carbon dioxide saturation.

The multimetallic catalysts formed according to the process of the present invention comprise a platinum group metal and an additional metal on an appropriate support. Platinum group metals include one or more of ruthenium, rhodium, palladium, osmium, iridium and platinum. The additional metal or metals is, or are, selected from Group VIIA, i.e. manganese, technetium and rhenium; and Group IVB, i.e. germanium, tin and lead of the Periodic Chart of the Elements (Periodic Chart refers to Fisher Scientific Company, Cat. No. 5-702-10, 1978). Examples of bimetallic combinations embraced by the present invention include platinum-rhenium, platinum-germanium, platinum-tin and iridium-rhenium.

The refractory support used in the present invention is a porous adsorptive material having a surface area exceeding 20 square meters per gram and preferably, greater than 100 square meters per gram. Refractory inorganic oxides are preferred supports, particularly alumina or mixtures thereof with silica. Alumina is particularly preferred and may be used in a large variety of forms including alumina precipitate or gel, alumina monohydrate and sintered alumina. Various forms of alumina, either singly or in

combination, such as eta, chi, gamma, theta, delta or alpha alumina may be suitably employed as the alumina support. Preferably, the alumina is gamma alumina and/or eta alumina. The above nomenclature used in the present specification and claims with reference to alumina phase designation is that generally employed in the United States and described in *The Aluminum Industry: Aluminum and its Production* by Edwards, Frary and Jeffries, published by McGraw-Hill (1930). The refractory support, desirably alumina has a preferred particle size of at least 0.01 microns and generally not exceeding 3000 microns. The alumina may be employed in massive form but generally will be in the form of a powder or in particle form, either irregularly shaped or uniformly shaped, such as beads, cubes, tablets and extruded pellets. In the preparation of spheroidal alumina gel particles, an alumina hydrosol is prepared by intimate admixture of suitable reactants and the hydrosol is introduced in the form of globules to a water-immiscible medium, the depth and temperature of which is controlled so that the hydrosol globules set to spheroidal particles of hydrogel during passage through the medium. The resulting hydrogel particles are thereafter withdrawn from the forming zone and conducted to suitable washing, drying and/or calcining equipment. Alumina, in the form of a precipitate, may be prepared by adding a suitable reagent such as ammonium hydroxide or ammonium carbonate to an aluminum salt such as aluminum chloride, aluminum nitrate or aluminum acetate in an amount sufficient to form aluminum hydroxide which, upon drying, is converted to alumina. After the alumina has been formed, it is generally washed to remove soluble impurities. Washing procedures ordinarily involve washing with water, either in combination with filtration or as separate operations. It has been found that filtration of the alumina is improved when the wash water contains a small amount of ammonium hydroxide. The extent of washing will depend to some extent on the nature of the reactants initially employed in preparation of the alumina precipitate.

Halogen may be added to the support, preferably alumina, in a form which will readily react therewith in order to obtain the desired results. One feasible method of adding the halogen is in the form of an acid such as hydrogen fluoride, hydrogen bromide, hydrogen chloride and/or hydrogen iodide. Other suitable sources of halogen include volatile salts such as ammonium fluoride and ammonium chloride. When such salts are used, the ammonium ions will be removed during subsequent heating of the catalyst. Halogen may also be added as fluorine, chlorine, bromine or iodine or by treatment in gaseous hydrogen halide. The halogen, preferably chlorine or fluorine, may be incorporated into the catalyst at any suitable stage in the catalyst manufacture. Thus, halogen may be added before, after or during incorporation of the metals. It is preferred to introduce halogen during impregnation with the metal or metals after the alumina has undergone carbon dioxide treatment. One method to accomplish this is to use halogen-containing metal compounds such as chloroplatinic acid or chloroiridic acid. Additional amounts of halogen may be incorporated in the catalyst by contacting it with materials such as hydrogen fluoride and hydrogen chloride, either prior to or subsequent to the metal impregnation step. Halogen may also be incorporated by contacting the catalyst with a gaseous stream containing the halogen such as chlorine or hydrogen chloride. One feasible way to halogenate the alumina is by the addition of an alkyl halide such as tertiary butyl chloride during the reforming operation. The amount of halogen introduced into the support is such that the halogen content of the overall catalyst is from 0.1 to 5 weight percent.

It is an essential feature of the present invention that the alumina base be pretreated with gaseous carbon dioxide prior to impregnation with a solution containing the desired metals. The alumina base, either with or without halogen, is dried, preferably to a water content of less than 30 percent by weight. It is particularly preferred that the alumina base, after drying, be calcined before contact thereof with gaseous carbon dioxide. The dried and/or calcined alumina is thereafter treated with gaseous carbon dioxide. Such treatment is generally effected under room temperature conditions utilizing a carbon dioxide pressure in the range of between about 100 kPa (0 psig) and 450 kPa (50 psig). The alumina is generally treated with carbon dioxide for a period of from one minute to 48 hours and more usually from one minute to 3 hours. It is to be noted that the time of gas treatment and the pressures set forth above are not considered critical, it being only necessary that the alumina base be exposed to a gaseous carbon dioxide atmosphere for a sufficient period of time and under sufficient pressure to become substantially saturated. The gas initially contained in the pores of the alumina base, which will ordinarily be air, may be replaced by sweeping the alumina particles with gaseous carbon dioxide for a sufficient period of time to replace substantially all of the air in the pores of the alumina with carbon dioxide. It is generally preferred, however, to subject the porous alumina base to a vacuum, thereby removing the air or other gas contained therein and subsequently to contact the evacuated particles with gaseous carbon dioxide. The alumina, after treatment with carbon dioxide, is thereafter impregnated with a solution of suitable compounds of the desired metals. In one preferred embodiment of the invention, the alumina, after pretreatment, is maintained in an atmosphere of gaseous carbon dioxide during the subsequent impregnation. Desirably, the alumina which has undergone pretreatment with gaseous carbon dioxide should be brought into contact with the impregnating solution containing compounds of the desired metals immediately after such pretreatment to insure the optimum results of this invention.

A particularly effective method of impregnating the carbon dioxide-treated alumina support comprises the use of an aqueous solution of platinum group metal-containing acids such as chloroplatinic acid, bromoplatinic acid, chloroiridic acid and perrhenic acid ($HReO_4$). A particularly preferred embodiment of this invention involves the preparation of a bimetallic catalyst comprising platinum-rhenium on alumina. In the preparation of such a catalyst, an aqueous solution of chloroplatinic acid and perrhenic acid is

commingled with the carbon dioxide-treated alumina particles and the resulting mixture is permitted to stand, preferably with or after suitable agitation, so that thorough mixing is obtained and even distribution of the platinum and rhenium throughout the alumina support is attained. This period of contact will generally be in the approximate range of from 2 hours to 48 hours, and more generally, from 16 hours to 24 hours. Solutions of other platinum group-containing compounds which may also be suitably employed for impregnation include platinum tetrachloride, ammonium platinum chloride, trimethyl benzyl ammonium platinum chloride, tetrammineplatinum (II) chloride, ammonium platinum nitrate, dinitrodiammineplatinum (II) and ammonium perrhenate.

The resulting composite of alumina and the metals with the combined halogen is dried at a temperature of from 93°C (200°F) to 260°C (500°F) for a period of time of from 0.5 hours to 24 hours or longer and thereafter the composite is calcined, in the presence of an oxygen containing gas, e.g. air, at a temperature of from 427°C (800°F) to 538°C (1000°F) for a period of time of from 0.5 hour to 12 hours or more. In some instances, depending on the platinum group metal, the calcination may occur in nitrogen in lieu of air. In addition to calcination, the composite may be exposed in a hydrogen atmosphere to reduce a substantial portion of the metal components to the elemental state. Such reduction is generally conducted at temperatures not in excess of 538°C (1000°F).

Typically the amount of each individual metal component is from 0.05 weight percent to 5.0 weight percent, the remaining weight of the catalyst being support material with some halogen content.

The preparation of catalysts according to this invention results in enhancement in catalytic activity. Without wishing to be bound by any particular theory of operability, it is believed that this enhancement in activity is due to improved metal distribution throughout the support particle. It is further believed that the better metal distribution through the support alleviates problems resulting from diffusion. It is felt that the high metal dispersion allows intimate contact between hydrocarbon molecules and more active catalytic (metal) sites. Incomplete coke burning in the core of the catalyst, a problem in catalysts prepared without carbon dioxide treatment, does not occur, again it is believed, because of the high metal distribution throughout the particle.

In a particular embodiment of the process of this invention, alumina beads are pretreated with gaseous carbon dioxide; then, while the beads are mixed by continuous rotation, the beads are impregnated with an aqueous solution of compounds (or complexes) containing the desired metals followed by drying and calcination. Post impregnation carbon dioxide treatment may be utilized as a precaution.

Whereas the prior art U.S. Patent Nos. 2,884,382 and 3,518,207 teach that carbon dioxide treatment of alumina supports during the impregnation with only platinum promotes a uniform platinum distribution throughout the support, it would not follow that other metals would behave in a similar manner. Of particular importance is the metal rhenium, since a preferred embodiment of this invention involves the preparation of a catalyst comprising platinum-rhenium on alumina. The following will demonstrate that no prediction can be made on the outcome of the interaction of $ReO_4^-$ with $Al_2O_3$ solely on the basis of the nature of platinum chemistry.

The impregnation of $Al_2O_3$ beads with platinum and rhenium can be accomplished using aqueous solutions of $H_2PtCl_6$ and $HReO_4$. Both acids are completely dissociated in water (F. A. Cotton and G. Wilkinson, *Advanced Inorganic Chemistry,* John Wiley and Son, N. Y., 1972, p. 1040; R. D. Peacock, *The Chemistry of Technetium and Rhenium,* Elsevier Publishing Co., London, 1966, p. 32).

$$H_2PtCl_6+2H_2O \rightleftharpoons 2H_3O^++PtCl_6^{2-}$$

$$HReO4+H_2O \rightleftharpoons H_3O^++ReO_4^-$$

Any discussion of the differences in the chemistry of impregnation by these metals must be based on differences between the anions. The platinum anion, hexachloroplatinate, $PtCl_6^{2-}$, is an octahedral di-anion with platinum in the +4 ($d^6$) oxidation state. The rhenium anion, perrhenate, $ReO_4-$, is a tetrahedral mono-anion with rhenium in the +7 ($d^0$) oxidation state (F. A. Cotton and G. Wilkinson, *Advanced Inorganic Chemistry,* John Wiley and Son, N. Y. 1972, p. 973, 1031).

The anions of interest show quite different redox potentials as given by W. M. Latimer and J. H. Hildebrand, *Reference Book of Inorganic Chemistry,* 3rd ed., Macmillian Co., N. Y. 1959, p. 395, 443, 450.

| | Volts |
|---|---|
| $Re^0 \xrightarrow{-0.25} ReO_2 \xrightarrow{-0.51} ReO_4-$ | −0.76 |
| $Pt^0 \xrightarrow{-0.73} PtCl_42- \xrightarrow{-0.72} PtCl_62-$ | −1.45 |
| $Ir^0 \xrightarrow{-1.0} IrCl_63- \xrightarrow{-1.02} IrCl_62-$ | −2.02 |

The anion structural and charge differences as well as differences in the platinum and rhenium

oxidation states lead to differences in their chemistry as illustrated by the solubilities of the salts in water (J. A. Dean, editor, *Lange's Handbook of Chemistry,* 12 ed., McGraw-Hill Book Co., N. Y., 1979, p. 4—22 and R. D. Peacock, *The Chemistry of Technetium and Rhenium,* Elsevier Publishing Co., London, 1966, p. 33). For example $(NH_4)_2PtCl_6$ has a solubility, at 20°C. of 0.5 g/100 g $H_2O$ while $NH_4ReO_4$ has a solubility, at 20°C. of 6.2 g/100 g $H_2O$. The ammonium salt of $ReO_4{}_-$ is much more soluble than $(NH_4)_2PtCl_6$. The corresponding ammonium salt of $IrCl_62-$ has a solubility, at 19°C. of 15.4 g/100 g. of $H_2O$. (W. F. Lincke, *Solubilities of Inorganic and Metal-Organic Compounds,* 4th ed., D. Van Nostrand Co., Inc., N. Y. 1958, p. 1304).

Due to the differences in the anion charge, structure, metal oxidation state and chemistry, no predictions about $ReO_4{}_-$ and $Al_2O_3$ interactions can be made based solely on the chemistry of platinum. The similarities in structure, charge and metal of the anions, $PtCl_62-$ and $IrCl_62-$, indicate that the Ir anion would be quite similar to the platinum anion in its interaction with $Al_2O_3$ (Cotton and Wilkinson, loc. cit., p. 1018).

The present invention also provides a process for preparing a trimetallic catalyst which comprises the steps of

(a) preparing a bimetallic catalyst composite by the process described above;

(b) preparing a unimetallic catalyst composite comprising a metal selected from ruthenium, rhodium, palladium, osmium, iridium, manganese, technetium and rhenium on a support by a process which comprises contacting the support with gaseous carbon dioxide in an amount and for a period of time sufficient to substantially saturate the support with carbon dioxide, thereafter impregnating the support with the desired metal and calcining the resulting composite; and

(c) mixing together the catalyst composites prepared in steps (a) and (b).

The process step (b) above is more fully described and claimed in copending Application No. 84200526.6. (EP—A—118162).

The catalysts prepared according to the process of the present invention are particularly useful in the reforming of hydrocarbons. Charge stocks conventionally employed in reforming operations are contemplated for use with the catalysts described herein. These stocks include virgin naphtha, cracked naphtha, gasoline, including FCC gasoline, or mixtures thereof boiling within the approximate range of from 21°C (70°F) to 260°C (500°F) and, preferably within the range of from 49°C (120°F) to 232°C (450°F). The charge stock is contacted in the vapor phase with the catalyst at a liquid hourly space velocity of from 0.1 to 10 and preferably from 0.5 to 4. Reaction temperature is within the approximate range of from 371°C (700°F) to 593°C (1100°F) and preferably, from 427°C (800°F) to 538°C (1000°F). Hydrogen may be added to the reaction zone at a rate corresponding to a mole ratio of hydrogen to hydrocarbon charge of from 0.5 to 20 and preferably from 2 to 12. Reaction pressure is maintained from 450 kPa (50 psig) to 7000 kPa (1000 psig), preferably from 795 kPa (100 psig) to 4935 kPa (700 psig). Since the reforming process produces large quantities of hydrogen, at least a portion thereof may be conveniently employed for the introduction of hydrogen with the feed.

It is contemplated that the catalysts prepared according to the process of the present invention may be employed in any of the conventional types of processing equipment. Thus, the catalysts may be used in the form of pills, pellets, extrudates, spheres, granules, broken fragments or various other shapes dispersed as a fixed bed within a reaction zone. The charge stock may be passed through the catalyst bed as a liquid, vapor or mixed phase in either upward or downward flow. The catalysts may also be used in a form suitable for moving beds. In such instance, the charge stock and catalyst are contacted in a reforming zone wherein the charge stock may be passed in concurrent or countercurrent flow to the catalyst. Alternatively, a suspensoid-type process may be employed in which the catalyst is slurried in the charge stock and the resulting mixture conveyed to the reaction zone. The reforming process is generally carried out in a series of several reactors. Usually, three to five reactors are used. The catalyst may be employed in just one of the reactors, e.g., the first reactor or in several reactors or in all reactors. After reaction, the product from any of the above processes is separated from the catalyst by known techniques and conducted to distillation columns where the various desired components are obtained by fractionation.

The following examples illustrate the present invention.

The supports used in the following examples were commercially obtained spheroidal 1.6 mm gamma alumina beads. Typical analytical properties of these beads are given in Table 1. In general, the supports were humidified before each preparation by storing over water in a closed vessel for at least four hours. This humidification step can be combined with the carbon dioxide pretreatment step if so desired. The humidification step is not essential to achieve the beneficial results afforded by the present invention. The use of humidification, however, depends on the state of hydration of the support.

TABLE 1
Typical analytical properties of γ-$Al_2O_3$ beads

| | |
|---|---|
| Density, Real, g/cc | 2.94 |
| Particle, g/cc | 0.76 |
| Pore volume, cc/g | 0.97 |
| Surface Area, $m^2/g$ | 195 |
| percent $SiO_2$ | 0.35 |
| percent Na | 0.02 |
| percent Cl | 0.04 |
| Crystallinity (order-disorder) | intermediate |

Example 1

A flask was filled with 150 g. of humidified gamma $Al_2O_3$ beads. The flask was attached to a rotary evaporator and evacuated and backfilled with $CO_2$. The bead containing flask was then rotated and, under a partial vacuum, impregnated with 135 ml of an aqueous solution of $H_2Pt{\cdot}Cl_6{\cdot}6H_2O$ and $HReO_4$ containing an equivalent of 0.9 g of metallic platinum and 0.9 g of metallic rhenium. Impregnation was accomplished by spraying the solution over the revolving beads. The impregnated beads were held under a $CO_2$ atmosphere. for one hour and then dried for 18 hours in a forced air draft oven at 121°C (250°F). The platinum-rhenium containing beads were then calcined for 2 hours at 482°C (900°F) in air. The resulting composite contained 0.6 weight percent platinum and 0.6 weight percent rhenium on alumina. The post impregnation $CO_2$ treatment used in this example and other following examples is not essential and was used as a precaution.

Example 2

In this example, a composite was prepared containing 0.6 weight percent platinum and 0.6 weight percent rhenium on alumina, with no presaturation with carbon dioxide.

A flask was filled with 15 g. of humidified gamma $Al_2O_3$ beads. The beads were agitated and impregnated using a separatory funnel, with 13.5 ml of an aqueous solution of $H_2PtCl_6{\cdot}6H_2O$ and $HReO_4$ containing an equivalent of 0.09 g of metallic platinum and 0.09 g of metallic rhenium. This impregnation was conducted without the presence of $CO_2$. The impregnated beads were dried and calcined as described in Example 1.

Example 3

A flask filled with 15 g. of humidified gamma $Al_2O_3$ beads was evacuated and backfilled with $CO_2$. The beads were impregnated with 13.5 ml of an aqueous solution of $H_2PtCl_6{\cdot}6H_2O$ and $HReO_4$ containing an equivalent of 0.045 g of metallic platinum and 0.045 g of metallic rhenium. The impregnation technique was that described in Example 2. The impregnated beads were held under a $CO_2$ atmosphere for one hour.

The beads were then dried and calcined as described in Example 1. The catalyst so prepared contained 0.3 weight percent platinum and 0.3 weight percent rhenium on alumina.

Example 4

Humidified gamma $Al_2O_3$ beads (15 g) were impregnated, dried and calcined according to the procedure of Example 3 with the exception that the $CO_2$ treatment was omitted. The finished catalyst contained 0.3 weight percent platinum and 0.3 weight percent rhenium on alumina.

Example 5

A double cone blender was filled with 250 g of humidified, gamma $Al_2O_3$ beads as described in Example 2. The blender was attached to a rotary evaporator and was evacuated and backfilled with $CO_2$. The blender was then rotated and, under a partial vacuum, the beads were impregnated with 225 ml of an aqueous solution of $H_2IrCl_6{\cdot}6H_2O$ containing an equivalent of 1.5 g of metallic iridium. The method of impregnation was the same as that described in Example 2. The impregnated beads were held under a $CO_2$ atmosphere for one hour and then dried for 18 hours in a forced air draft oven at 121°C (250°F). The iridium containing beads were calcined for one hour at 371°C (700°F) in nitrogen. The resulting composite contained 0.6 weight percent iridium on alumina.

Example 6

In this example, a composite is prepared without carbon dioxide presaturation and containing 0.6 weight percent iridium on alumina.

The method of preparation was similar to that described in Example 4. In this example, 10 g of humidified gamma $Al_2O_3$ beads were impregnated with 9 ml of an aqueous solution of $H_2IrCl_6 \cdot 6H_2O$ containing an equivalent of 0.06 g of metallic iridium. The impregnated beads were dried at 121°C (250°F) in air for 18 hours and then calcined for one hour at 371°C (700°F) in nitrogen.

Example 7

Equal weight samples of the composites prepared according to Example 1 and 5 were combined and thoroughly mixed together in a double cone blender. The resulting composite contained separate particles of platinum-rhenium on $CO_2$ presaturated alumina and iridium on $CO_2$ presaturated alumina with the amounts of platinum, rhenium and iridium each being 0.3 weight percent.

Example 8

Equal weight samples of the composites prepared according to Examples 2 and 6 were combined and thoroughly mixed together in a double cone blender. The resulting composite contained separate particles of platinum-rhenium on alumina and iridium on alumina with the amounts of platnium, rhenium and iridium each being 0.3 weight percent.

Examples 9 through 16

The catalysts prepared according to the general procedures of Examples 1—8 each underwent a catalyst dehydrogenation/dehydrocyclization screening test using n-hexane and cyclohexane as charge stocks. The conditions for such screening tests were as follows:

| | |
|---|---|
| Test Conditions: | 0.5 g catalyst<br>$H_2$ Reduction at 454°C (849°F) |
| Dehydrogenation: | Charge Stock Cyclohexane<br>WHSV=3 $Hr^{-1}$<br>$H_2$/HC=7<br>Temp=300°C (572°F)<br>Time=10 minutes |
| Dehydrocyclization: | Charge Stock n-hexane<br>WHSV=3 $hr^{-1}$<br>$H_2$/HC=7<br>Temp=470°C (878°F)<br>Time=60 minutes |

The screening test was conducted by first reducing the catalyst sample with hydrogen at 454°C (849°F). After such reduction, cyclohexane was passed over the catalyst sample at the above stated-conditions for 10 minutes. After this 10 minutes contact, the sample was flushed with sufficient hydrogen to raise the temperature from 300°C (572°F) to 470°C (878°F) and then n-hexane was passed over the catalyst sample at the above stated conditions for 60 minutes.

The catalysts utilized for Examples 9—16 are identified as follows:

| In Example No. | Catalyst utilized was prepared according to the general procedure of Example No. |
|---|---|
| 9 | 1 |
| 10 | 2 |
| 11 | 3 |
| 12 | 4 |
| 13 | 5 |
| 14 | 6 |
| 15 | 7 |
| 16 | 8 |

The results of these screening tests are given in table 2. Such results allow for comparisons to be made between catalysts based on catalytic activity. The catalysts prepared by the described technique using $CO_2$

show an enhanced activity with respect to both dehydrogenation and dehydrocyclization when compared to catalysts prepared without $CO_2$.

TABLE 2

| Example No. | 9 | 10 | 11 | 12 | 13 | 14 | 15 | 16 |
|---|---|---|---|---|---|---|---|---|
| Catalyst Description: Single Particle or Dual Particle | Single | Single | Single | Single | Single | Single | Dual | Dual |
| $CO_2$ Presaturation | Yes | No | Yes | No | Yes | No | Yes | No |
| Wt. percent Pt | 0.6 | 0.6 | 0.3 | 0.3 | — | — | 0.3 | 0.3 |
| Wt. percent Re | 0.6 | 0.6 | 0.3 | 0.3 | — | — | 0.3 | 0.3 |
| Wt. percent Ir | — | — | — | — | 0.6 | 0.6 | 0.3 | 0.3 |
| Conversion of Cyclohexane (Dehydrogenation) | 68.7 | 64.1 | 72.5 | 62.9 | 68.5 | 68.3 | 86.9 | 69.3 |
| Conversion of n-Hexane (Dehydrocyclization) | 44.9 | 40.3 | 42.0 | 29.6 | 61.6 | 45.5 | 52.9 | 52.4 |

Examples 17 through 18

A direct comparison of metal distribution was made between platinum-rhenium catalysts prepared with and without carbon dioxide saturation in these examples. The technique was an electron probe micro analysis in which an electron beam was focused on each catalyst sample.

The effect of the electron beam was to knock an electron out of the L shell of the particular metal atom and cause an electron from the higher energy M shell to drop down to the space vacated by the knocked-out electron. The dropping down of this M shell electron emitted energy in the form of an X-ray, more particularly identified as α. A spectrometer picked up this "L α X-ray", enabling plots to be derived for both platinum and rhenium for both catalyst samples (with and without a carbon dioxide pretreatment). Such plots involved the intensity of the L α X-ray as a function of the distance across each catalyst particle.

In Example 17, a $CO_2$ saturated (treated) platnium-rhenium catalyst prepared according to the general procedure as set forth in Example 3 was exposed to the electron probe micro analysis as given above. A plot of L α X-ray intensity as a function of the distance across the catalyst particle for both platinum and rhenium is shown in Figure 1. As can be seen from Figure 1, each metal was found to possess a uniform metal distribution throughout the particle.

In Example 18, a platinum-rhenium catalyst without $CO_2$ saturation (treatment) and prepared according to the general procedure as set forth in Example 4 was subjected to the above described electron probe micro analysis. A plot of L α X-ray intensity as a function of the distance across the catalyst particle for both platinum and rhenium is shown in Figure 2. As is clearly shown by Figure 2, the metal distribution for both platinum and rhenium is not uniform, in fact, the metals were found to be highly concentrated at the particle edge.

**Claims**

1. A process for preparing a multimetallic catalyst composite comprising one or more metals of the platinum group and one or more metals from Groups VIIA and IVB of the Periodic Chart of the Elements on a common support, which comprises contacting the support with gaseous carbon dioxide in an amount and for a period of time sufficient to substantially saturate the support with carbon dioxide, thereafter impregnating the support with the desired metals and calcining the resulting composite.

2. A process according to claim 1, wherein the catalyst comprises platinum.

3. A process according to claim 2, wherein the catalyst comprises platinum and rhenium.

4. A process according to claim 3, wherein impregnation is effected by utilizing an aqueous solution of $H_2PtCl_6$ and $HReO_4$.

5. A process according to claim 3 wherein impregnation is effected by utilizing an aqueous solution of chloroplatinic acid, bromoplatinic acid, chloroiridic acid and perrhenic acid.

6. A process according to any one of claims 1 to 5, wherein each metal in the resulting composite is present in an amount of from 0.05 to 5.0 weight percent based on total catalyst weight.

7. A process according to any one of claims 1 to 6, wherein the support is alumina.

8. A process according to claim 7, wherein the support is gamma alumina.

9. A process according to claim 7 or claim 8, wherein the alumina has a surface area exceeding 20 $m^2/g$.

10. A process according to claim 9, wherein the alumina has a surface area exceeding 100 $m^2/g$.

11. A process according to any one of claims 1 to 10, wherein the support is contacted with carbon dioxide at room temperature, at a pressure of from 100 to 450 kPa.

12. A process according to any one of claims 1 to 11, wherein the support is contacted with carbon dioxide for a period of time from one minute to 48 hours.

13. A process according to claim 12, wherein the period of time is from one minute to three hours.

14. A process according to any one of claims 1 to 13, wherein the catalyst further comprises halogen.

15. A process according to claim 14, wherein the amount of the halogen present is from 0.1 to 5 weight percent based on total catalyst weight.

16. A process according to claim 14 or claim 15, wherein the halogen is chlorine.

17. A process according to any one of claims 1 to 16, wherein the calcination is conducted at a temperature of from 427°C to 538°C.

18. A process according to any one of claims 1 to 17, wherein the composite is further subjected to carbon dioxide treatment after impregnation, but prior to calcination.

19. A process according to any one of claims 1 to 18, wherein subsequent to the calcination, the composite is reduced in a hydrogen atmosphere at a temperature not in excess of 538°C.

20. A process for preparing a trimetallic catalyst which comprises the steps of

(a) preparing a bimetallic catalyst composite by a process according to any one of claims 1 to 19;

(b) preparing a unimetallic catalyst composite comprising a metal selected from ruthenium, rhodium, palladium, osmium, iridium, manganese, technetium and rhenium on a support by a process which comprises contacting the support with gaseous carbon dioxide in an amount and for a period of time sufficient to substantially saturate the support with carbon dioxide, thereafter impregnating the support with the desired metal and calcining the resulting composite; and

(c) mixing together the catalyst composites prepared in steps (a) and (b).

**Patentansprüche**

1. Verfahren zur Herstellung einer mehrmetallischen Katalysatorzusammensetzung, die ein oder mehrere Metalle der Platin-Gruppe und ein oder mehrere Metalle der Gruppen VIIA und IVB des Periodensystems der Elemente auf einem üblichen Träger umfaßt, bei dem der Träger mit gasförmigem Kohlendioxid in einer Menge und während eines Zeitraumes in Kontakt gebracht wird, der ausreichend ist, um den Träger im wesentlichen mit Kohlendioxid zu sättigen, wonach der Träger mit den gewünschten Metallen imprägniert und die resultierende Zusammensetzung kalziniert wird.

2. Verfahren nach Anspruch 1, worin der Katalysator Platin umfaßt.

3. Verfahren nach Anspruch 2, worin der Katalysator Platin und Rhenium umfaßt.

4. Verfahren nach Anspruch 3, worin die Imprägnierung unter Verwendung einer wässrigen Lösung von $H_2PtCl_6$ und $HReO_4$ durchgeführt wird.

5. Verfahren nach Anspruch 3, worin die Imprägnierung unter Verwendung einer wässrigen Lösung von Chlorplatinsäure, Bromplatinsäure, Chloriridiumsäure und Perrheniumsäure durchgeführt wird.

6. Verfahren nach einem der Ansprüche 1 bis 5, worin jedes Metall in der resultierenden Zusammensetzung in einer Menge von 0,05 bis 5,0 Gew.-%, bezogen auf das Katalysatorgesamtgewicht, vorhanden ist.

7. Verfahren nach einem der Ansprüche 1 bis 6, worin der Träger Aluminiumoxid ist.

8. Verfahren nach Anspruch 7, worin der Träger γ-Aluminiumoxid ist.

9. Verfahren nach Anspruch 7 oder 8, worin das Aluminiumoxid eine spezifische Oberfläche von größer als 20 $m^2/g$ hat.

10. Verfahren nach Anspruch 9, worin das ALuminiumoxid eine spezifische Oberfläche von größer als 100 $m^2/g$ hat.

11. Verfahren nach einem der Ansprüche 1 bis 10, worin der Träger bei Raumtemperatur bei einem Druck von 100 bis 450 kPa mit Kohlendioxid in Kontakt gebracht wird.

12. Verfahren nach einem der Ansprüche 1 bis 11, worin der Träger während eines Zeitraumes von 1 Min. bis 48 Std. mit Kohlendioxid in Kontakt gebracht wird.

13. Verfahren nach Anspruch 12, worin der Zeitraum von 1 Min. bis 3 Std. beträgt.

14. Verfahren nach einem der Ansprüche 1 bis 13, worin der Katalysator weiterhin ein Halogen umfaßt.

15. Verfahren nach Anspruch 14, worin die Menge des vorhandenen Halogens von 0,5 bis 5 Gew.-%, bezogen auf das Katalysatorgesamtgewicht, beträgt.

16. Verfahren nach Anspruch 14 oder 15, worin das Halogen Chlor ist.

17. Verfahren nach einem der Ansprüche 1 bis 16, worin die Kalzinierung bei einer Temperatur von 427 bis 538°C durchgeführt wird.

18. Verfahren nach einem der Ansprüche 1 bis 17, worin die Zusammensetzung weiterhin nach der Imprägnierung, aber vor der Kalzinierung, einer Behandlung mit Kohlendioxid unterzogen wird.

19. Verfahren nach einem der Ansprüche 1 bis 18, worin die Zusammensetzung nach der Kalzinierung in einer Wasserstoffatmosphäre bei einer Temperatur von nicht höher als 538°C reduziert wird.

20. Verfahren zur Herstellung eines trimetallischen Katalysators, welches die Stufen umfaßt:

(a) Herstellen einer bimetallischen Katalysatorzusammensetzung durch ein Verfahren nach einem der Ansprüche 1 bis 19;

(b) Herstellen einer einmetallischen Katalysatorzusammensetzung, die ein Metall, ausgewählt aus Ruthenium, Rhodium, Palladium, Osmium, Iridium, Mangan, Technetium und Rhenium, auf einem Träger umfaßt, durch ein Verfahren, bei dem der Träger mit gasförmigem Kohlendioxid in einer Menge und während eines Zeitraumes in Kontakt gebracht wird, die ausreichend sind, um den Träger im wesentlichen mit Kohlendioxid zu sättigen, danach Imprägnieren des Trägers mit dem gewünschten Metall und Kalzinieren der entstandenen Zusammensetzung und

(c) Vermischen der Katalysatorzusammensetzungen, die in den Stufen (a) und (b) hergestellt wurden, miteinander.

**Revendications**

1. Un procédé de préparation d'un composite pour catalyseur polymétallique comprenant un ou plusieurs métaux du groupe du platine et un ou plusieurs métaux des groupes VIIA et IVB de la Classification Périodique des Eléments sur un support commun, qui comprend la mise au contact pendant une durée suffisante du support avec une quantitité suffisante de dioxyde de carbone gazeux pour saturer pratiquement le support par le dioxyde de carbone puis l'imprégnation du support par les métaux désirés et la calcination du composé résultant.

2. Un procédé selon la revendication 1, dans lequel le catalyseur comprend du platine.

3. Un procédé selon la revendication 2, dans lequel le catalyseur comprend du platine et du rhénium.

4. Un procédé selon la revendication 3, dans lequel l'imprégnation est effectuée en utilisant une solution aqueuse de $H_2PtCl_6$ et $HReO_4$.

5. Un procédé selon la revendication 3, dans lequel l'imprégnation est effectuée en utilisant une solution aqueuse d'acide chloroplatinique, d'acide bromoplatinique, d'acide chloro-iridique et d'acide perrhénique.

6. Un procédé selon l'une quelconque des revendications 1 à 5, dans lequel chacun des métaux est présent dans le composite résultant en quantité comprise entre 0,05 et 5% en poids total par rapport au poids du catalyseur.

7. Un procédé selon l'une quelconque des revendications 1 à 6, dans lequel le support est l'alumine.

8. Un procédé selon la revendication 7, dans lequel le support est de l'alumine gamma.

9. Un procédé selon la revendication 7 ou 8, dans lequel l'alumine a une surface spécifique supérieure à 20 $m^2/g$.

10. Un procédé selon la revendication 9, dans lequel l'alumine a une surface spécifique supérieure à 100 $m^2/g$.

11. Un procédé selon l'une quelconque des revendications 1 à 10, dans lequel le support est mis au contact de dioxyde de carbone à température ambiante sous une pression comprise entre 100 et 450 kPa.

12. Un procédé selon l'une quelconque des revendications 1 à 11, dans lequel le support est mis au contact du dioxyde de carbone durant une période comprise entre 1 minute et 48 heures.

13. Un procédé selon la revendication 12, dans lequel la période de temps est comprise entre 1 minute et 3 heures.

14. Un procédé selon l'une quelconque des revendications 1 à 13, dans lequel le catalyseur comprend en outre un halogène.

15. Un procédé selon la revendication 14, dans lequel la quantité d'halogène présent est comprise entre 0,1 et 5% en poids par rapport au poids total du catalyseur.

16. Un procédé selon la revendication 14 ou 15, dans lequel l'halogénure est du chlore.

17. Un procédé selon l'une quelconque des revendications 1 à 16, dans lequel la calcination est effectuée à une température comprise entre 427°C et 538°C.

18. Un procédé selon l'une quelconque des revendications 1 à 17, dans lequel le composite est soumis en outre à un traitement au dioxyde de carbone après imprégnation mais avant la calcination.

19. Un procédé selon l'une quelconque des revendications 1 à 18, dans lequel après la calcination le composite est réduit en atmosphère d'hydrogène à une température non supérieure à 538°C.

20. Un procédé de préparation d'un catalyseur trimétallique qui comprend les étapes suivantes:

(a) préparation d'un catalyseur composite bimétallique par un procédé selon l'une quelconque des revendications 1 à 19;

(b) préparation d'un catalyseur composite monométallique comprenant un métal choisi dans la liste comprenant ruthénium, rhodium, palladium, osmium, iridium, manganèse, technétium et rhénium, sur un support par un procédé qui comprend la mise au contact pendant un temps suffisant du support avec une quantité suffisante de dioxyde de carbone gazeux pour saturer pratiquement le support par du dioxyde de carbone puis l'imprégnation du support par le métal désiré et la calcination du composite résultant; et

(c) le mélange des catalyseurs composites préparés dans les étapes (a) et (b).

FIGURE 1

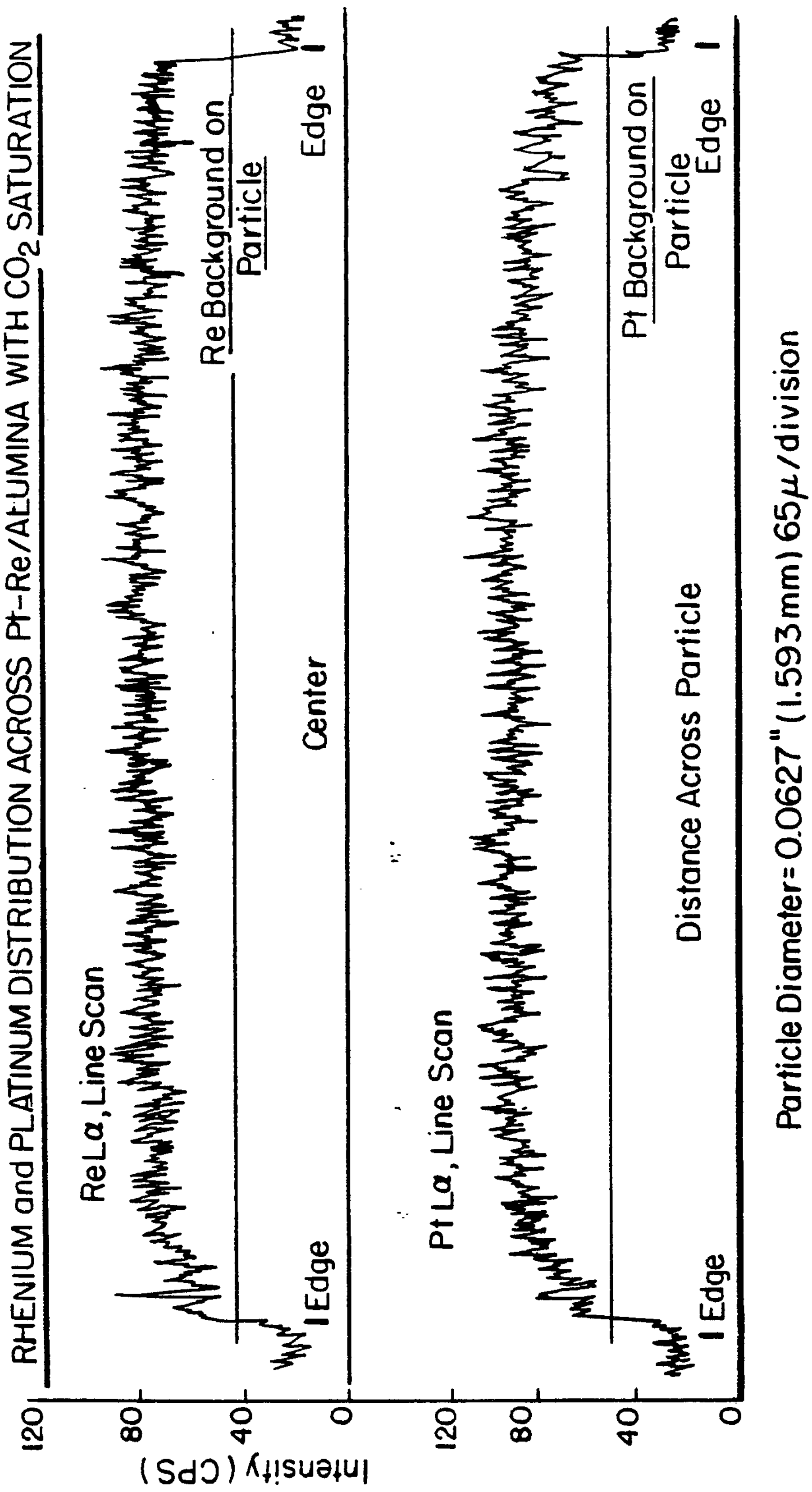
RHENIUM and PLATINUM DISTRIBUTION ACROSS Pt-Re/ALUMINA WITH $CO_2$ SATURATION
Re Lα, Line Scan
Re Background on Particle
Edge
Center
Edge
Pt Lα, Line Scan
Pt Background on Particle
Edge
Edge
Distance Across Particle
Particle Diameter = 0.0627" (1.593 mm) 65μ/division
Intensity (CPS)
120
80
40
0
120
80
40
0

FIGURE 2

RHENIUM and PLATINUM DISTRIBUTION ACROSS Pt-Re/ALUMINA WITHOUT $CO_2$ SATURATION